(19) **Europäisches Patentamt European Patent Office Office européen des brevets**

(11) **EP 4 611 290 A1**

(12) **EUROPEAN PATENT APPLICATION**
published in accordance with Art. 153(4) EPC

(43) Date of publication:
**03.09.2025 Bulletin 2025/36**

(21) Application number: **24757134.2**

(22) Date of filing: **08.02.2024**

(51) International Patent Classification (IPC):
***H04L 1/00*** *(2006.01)*

(52) Cooperative Patent Classification (CPC):
**H04L 1/00; H04L 5/00; H04W 72/04; H04W 72/25; H04W 74/08**

(86) International application number:
**PCT/KR2024/001887**

(87) International publication number:
**WO 2024/172405 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.02.2023 KR 20230018730**

(71) Applicants:
• **Hyundai Motor Company**
  **Seoul 06797 (KR)**

• **Kia Corporation**
  **Seoul 06797 (KR)**

(72) Inventor: **HONG, Ui Hyun**
  **Hwaseong-si, Gyeonggi-do 18280 (KR)**

(74) Representative: **Isarpatent**
  **Patent- und Rechtsanwälte**
  **Barth Hassa Peckmann & Partner mbB**
  **Friedrichstraße 31**
  **80801 München (DE)**

(54) **METHOD AND DEVICE FOR DETERMINING TRANSPORT BLOCK SIZE OF SIDELINK IN UNLICENSED BAND**

(57) A method and a device for determining a transport block size of a sidelink in an unlicensed band are disclosed. The method of a first UE may comprise the steps of: confirming, on the basis of configuration information about a start symbol, first and second start symbols corresponding to first and second data transmission candidates within a first slot section; and determining a TBS on the basis of the first and second start symbols.

【FIG. 11】

symbol index : 0 1 2 3 4 5 6 7 8 9 10 11 12 13

▨ : AGC symbol

▧ : PSCCH

▤ : PSSCH

▥ : guard symbol

**Description**

[Technical Field]

The present disclosure relates to a sidelink communication technique, and more particularly, to a sidelink communication technique for enhancing data transmission delay performance in an unlicensed band.

[Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, to improve sidelink communication, carrier aggregation (CA) operations, unlicensed band operations, FR2 band operations, and/or coexistence between LTE and NR may be considered. In particular, when sidelink communication is performed in an unlicensed band, methods to support the sidelink communication may be required. For operations in an unlicensed band, optimization of sidelink physical channel structures may be required. In addition, listen before talk (LBT) operations may need to be considered for sidelink communication in an unlicensed band.

[Disclosure]

[Technical Problem]

The present disclosure is directed to providing a method and an apparatus for determining a transport block size (TBS) in sidelink.

[Technical Solution]

A method of a first user equipment (UE), according to exemplary embodiments of the present disclosure for achieving the above-described objective, may comprise: identifying a first start symbol and a second start symbol respectively corresponding to a first transmission candidate and a second transmission candidate within a first slot based on start symbol configuration information; determining a transport block size (TBS) based on the first start symbol or the second start symbol; and in response to a listen before talk (LBT) operation performed in one start symbol among the first start symbol or the second start symbol being successful, performing a sidelink (SL) transmission with the TBS.

Each of the first start symbol and the second start symbol may be an auto gain control (AGC) symbol in the first slot, and the SL transmission with an equal TBS may be performed in each of the first transmission candidate and the second transmission candidate.

The TBS may be determined by considering a number of symbols included in the first slot, and one start symbol among the first start symbol or the second start symbol may serve as a basis for determining the TBS.

When the first start symbol serves as the basis for determining the TBS, the first start symbol and a guard symbol may be excluded from the number of symbols, and when the second start symbol serves as the basis for determining the TBS, at least two or more symbols among the first start symbol, the second start symbol, or the guard symbol may be excluded from the number of symbols.

The TBS may be determined by considering a number of resource elements (REs) included in the first slot, the number of REs may be calculated by subtracting an average value of a number of REs related to the first start symbol and a number of REs related to the second start symbol from a total number of REs within the first slot, and the SL transmission may include control information indicating that two start symbols exist within the first slot.

The TBS may be determined by considering a number of REs included in the first slot, one start symbol among the first start symbol or the second start symbol may serve as a basis for determining the TBS, and the SL transmission may include control information indicating the first start symbol or the second start symbol as the basis for determining the TBS.

The SL transmission may include control information instructing to determine the TBS, and the control information may be transmitted through at least one of a medium access control (MAC) control element (CE) message, a radio resource control (RRC) message, or a sidelink control information (SCI).

A method of a second user equipment (UE), according to exemplary embodiments of the present disclosure for achieving the above-described objective, may comprise: identifying a first start symbol and a second start symbol respectively corresponding to a first transmission candidate and a second transmission candidate within a first slot based on start symbol configuration information; monitoring a sidelink (SL) transmission of a first UE in one start symbol among the first start symbol or the second start symbol to receive control information from the first UE; and determining a transport block size (TBS) based on the control information and receiving data with the TBS from the first UE.

Each of the first start symbol and the second start symbol may be an auto gain control (AGC) symbol in the first slot, and the data may be equally receivable with the TBS from each of the first transmission candidate and the second transmission candidate.

The TBS may be determined by considering a number of symbols included in the first slot, and one start symbol among the first start symbol or the second start symbol may serve as a basis for determining the TBS.

When the first start symbol serves as the basis for determining the TBS, the first start symbol and a guard symbol may be excluded from the number of symbols, and when the second start symbol serves as the basis for determining the TBS, at least two or more symbols among the first start symbol, the second start symbol, or the guard symbol may be excluded from the number of symbols.

The TBS may be determined by considering a number of resource elements (REs) included in the first slot, the number of REs may be calculated by subtracting an average value of a number of REs related to the first start symbol and a number of REs related to the second start symbol from a total number of REs within the first slot, and the SL transmission may include control information indicating that two start symbols exist within the first slot.

The TBS may be determined by considering a number of REs included in the first slot, one start symbol among the first start symbol or the second start symbol may serve as a basis for determining the TBS, and the SL transmission may include control information indicating the first start symbol or the second start symbol as the basis for determining the TBS.

The control information may be received through at least one of a medium access control (MAC) control element (CE) message, a radio resource control (RRC) message, or a sidelink control information (SCI).

A first user equipment (UE), according to exemplary embodiments of the present disclosure for achieving the above-described objective, may comprise: at least one processor, wherein the at least one processor may cause the first UE to perform: identifying a first start symbol and a second start symbol respectively corresponding to a first transmission candidate and a second transmission candidate within a first slot based on start symbol configuration information; determining a transport block size (TBS) based on the first start symbol or the second start symbol; and in response to a listen before talk (LBT) operation performed in one start symbol among the first start symbol or the second start symbol being successful, performing a sidelink (SL) transmission with the TBS.

Each of the first start symbol and the second start symbol may be an auto gain control (AGC) symbol in the first slot, and the SL transmission with an equal TBS may be performed in each of the first transmission candidate and the second transmission candidate.

The TBS may be determined by considering a number of symbols included in the first slot, and one start symbol among the first start symbol or the second start symbol may serve as a basis for determining the TBS.

When the first start symbol serves as the basis for determining the TBS, the first start symbol and a guard symbol may be excluded from the number of symbols, and when the second start symbol serves as the basis for determining the TBS, at least two or more symbols among the first start symbol, the second start symbol, or the guard symbol may be excluded from the number of symbols.

The TBS may be determined by considering a number of resource elements (REs) included in the first slot, the number of REs may be calculated by subtracting an average value of a number of REs related to the first start symbol and a number of REs related to the second start symbol from a total number of REs within the first slot, and the SL transmission may include control information indicating that two start symbols exist within the first slot.

The TBS may be determined by considering a number of REs included in the first slot, one start symbol among the first start symbol or the second start symbol may serve as a basis for determining the TBS, and the SL transmission may include control information indicating the first start symbol or the second start symbol as the basis for determining the TBS.

[Advantageous Effects]

According to the present disclosure, in sidelink communication in an unlicensed band, two start symbols may be configured. When two start symbols exist, a transmitting terminal can determine a transport block size based on each of the two start symbols in order to efficiently transmit data. In addition, when the two start symbols are used within one slot, a delay of sidelink data transmission in the unlicensed band can be reduced. Accordingly, sidelink communication in the unlicensed band can be efficiently performed, and the performance of the communication system can be enhanced.

[Description of Drawings]

FIG. 1 is a conceptual diagram illustrating scenarios of Vehicle-to-Everything (V2X) communications.
FIG. 2 is a conceptual diagram illustrating a first exemplary embodiment of a communication system.
FIG. 3 is a conceptual diagram illustrating a first exemplary embodiment of a communication node constituting a communication system.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6 is a block diagram illustrating a first exemplary embodiment of a user plane protocol stack of a UE performing sidelink communication.
FIG. 7 is a block diagram illustrating a first exemplary embodiment of a control plane protocol stack of a UE performing sidelink communication.
FIG. 8 is a block diagram illustrating a second exemplary embodiment of a control plane protocol stack of a UE performing sidelink communication.
FIG. 9 is a timing diagram illustrating a first exemplary embodiment of a communication method in an unlicensed band.
FIG. 10 is a conceptual diagram illustrating a first exemplary embodiment of data transmission in unlicensed band sidelink communication.
FIG. 11 is a conceptual diagram illustrating a second exemplary embodiment of data transmission in unlicensed band sidelink communication.

[Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

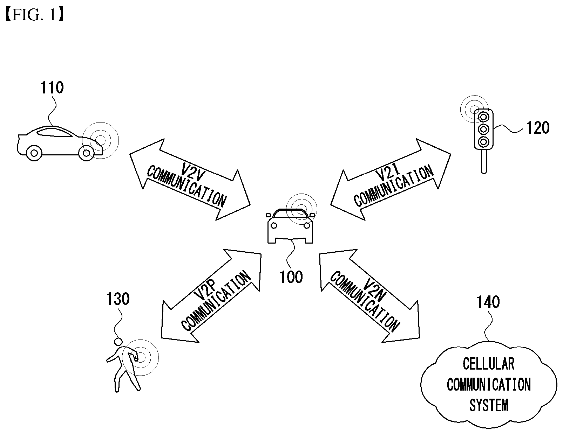

FIG. 1 is a conceptual diagram illustrating scenarios of Vehicle-to-Everything (V2X) communications.

As shown in FIG. 1, V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a communication system (e.g. communication network) 140, and the V2X communications supported by the communication system 140 may be referred to as 'Cellular-V2X (C-V2X) communications'. Here, the communication system 140 may include the 4G communication system (e.g. LTE communication system or LTE-A communication system), 5G communication system (e.g. NR communication system), and the like.

The V2V communications may include communications between a first vehicle 100 (e.g. a communication node located in the vehicle 100) and a second vehicle 110 (e.g. a communication node located in the vehicle 110). Various driving information such as velocity, heading, time, position, and the like may be exchanged between the vehicles 100 and 110 through the V2V communications. For example, autonomous driving (e.g. platooning) may be supported based on the driving information exchanged through the V2V communications. The V2V communications supported by the communication system 140 may be performed based on sidelink communication technologies (e.g. Proximity Based Services (ProSe) and Device-to-Device (D2D) communication technologies, and the like). In this case, the communications between the vehicles 100 and 110 may be performed using at least one sidelink channel.

The V2I communications may include communications between the first vehicle 100 and an infrastructure (e.g. road side unit (RSU)) 120 located on a roadside. The infrastructure 120 may include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported by the communication system 140 may be performed based on sidelink communication technologies (e.g. ProSe and D2D communication technologies, and the like). In this case, the communications between the vehicle 100 and the infrastructure 120 may be performed using at least one sidelink channel.

The V2P communications may include communications between the first vehicle 100 (e.g. the communication node located in the vehicle 100) and a person 130 (e.g. a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported by the communication system 140 may be performed based on sidelink communication technologies (e.g. ProSe and D2D communication technologies, and the like). In this case, the communications between the communication node located in the vehicle 100 and the communication node carried by the person 130 may be performed using at least one sidelink channel.

The V2N communications may be communications between the first vehicle 100 (e.g. the communication node located in the vehicle 100) and the communication system (e.g. communication network) 140. The V2N communications may be performed based on the 4G communication technology (e.g. LTE or LTE-A specified as the 3GPP standards) or the 5G communication technology (e.g. NR specified as the 3GPP standards). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, a Wireless Personal Area Network (WPAN) communication technology defined in IEEE 802.15, or the like.

Meanwhile, the communication system 140 supporting the V2X communications may be configured as follows.

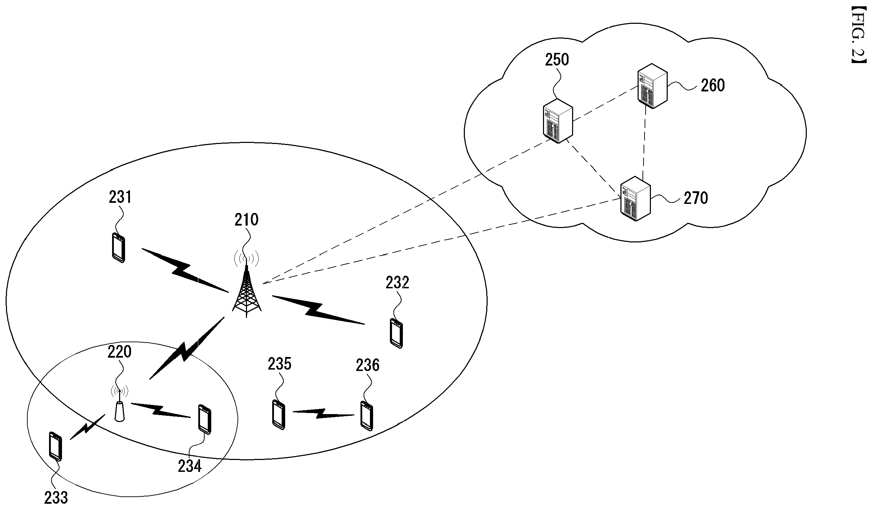

FIG. 2 is a conceptual diagram illustrating a first exemplary embodiment of a communication system.

As shown in FIG. 2, a communication system may include an access network, a core network, and the like. The access network may include a base station 210, a relay 220, user equipment (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the communication system supports the 4G communication technology, the core network may include a serving gateway (S-GW) 250, a packet data network (PDN) gateway (P-GW) 260, a mobility management entity (MME) 270, and the like.

When the communication system supports the 5G communication technology, the core network may include a user plane function (UPF) 250, a session management function (SMF) 260, an access and mobility management function (AMF) 270, and the like. Alternatively, when the communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the communication system supports a network slicing technique, the core network may be divided into a plurality of logical network slices. For example, a network slice supporting V2X communications (e.g. a V2V network slice, a V2I network slice, a V2P network slice, a V2N network slice, etc.) may be configured, and the V2X communications may be supported through the V2X network slices configured in the core network.

The communication nodes (e.g. base station, relay, UE, S-GW, P-GW, MME, UPF, SMF, AMF, etc.) constituting the communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g. base station, relay, UE, S-GW, P-GW, MME, UPF, SMF, AMF, etc.) constituting the communication system may be configured as follows.

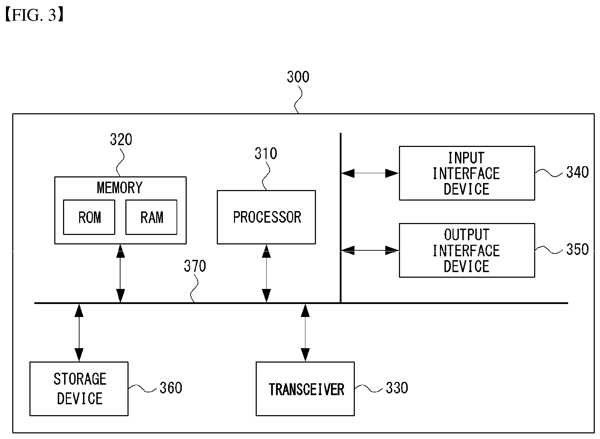

FIG. 3 is a conceptual diagram illustrating a first exemplary embodiment of a communication node constituting a communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one program command stored in at least one of the memory 320 and the storage device 360. The processor 310 may refer to a central processing unit (CPU), a graphics processing unit (GPU), or a dedicated processor on which methods in accordance with exemplary embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to a cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input multiple-output (MIMO) technologies (e.g. single user (SU)-MIMO, multi-user (MU)-MIMO, massive MIMO, etc.), coordinated multipoint (CoMP) communication technologies, carrier aggregation (CA) communication technologies, unlicensed band communication technologies (e.g. Licensed Assisted Access (LAA), enhanced LAA (eLAA), etc.), sidelink communication technologies (e.g. ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), evolved Node B (eNB), base transceiver station (BTS), radio remote head (RRH), transmission reception point (TRP), radio unit (RU), roadside unit (RSU), radio transceiver, access point, access node, or the like. The relay 220 may be referred to as a small base station, relay node, or the like. Each of the UEs 231 through 236 may be referred to as a terminal, access terminal, mobile terminal, station, subscriber station, mobile station, portable subscriber station, node, device, on-broad unit (OBU), or the like.

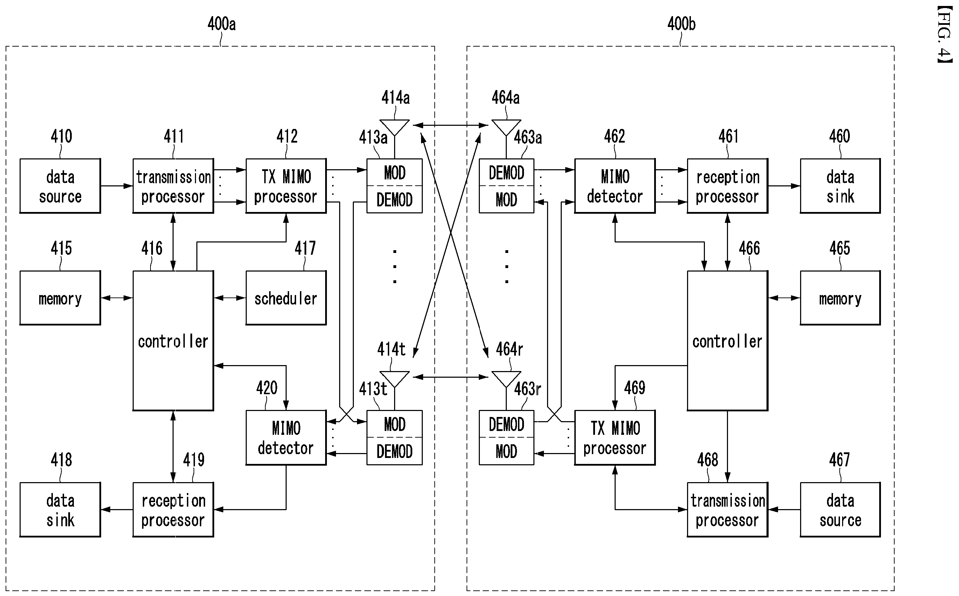

Meanwhile, communication nodes that perform communications in the communication network may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

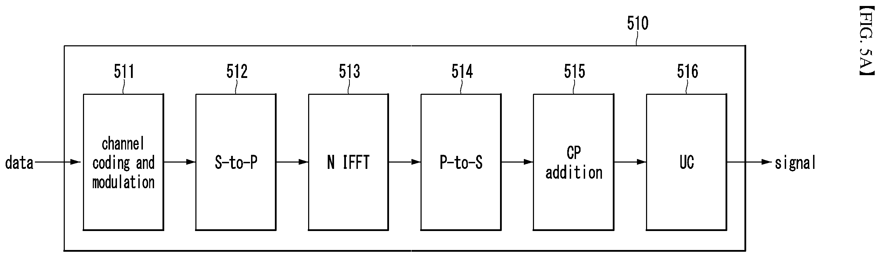

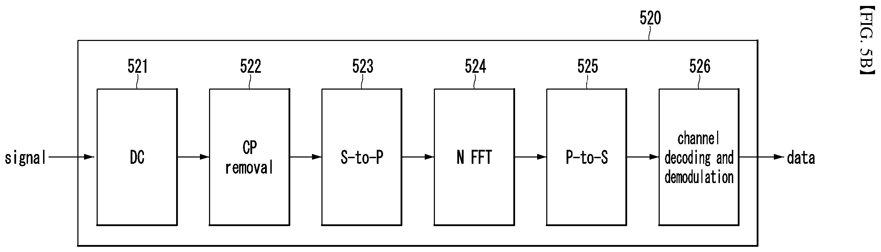

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, communications between the UEs 235 and 236 may be performed based on sidelink communication technology (e.g. ProSe communication technology, D2D communication technology). The sidelink communication may be performed based on a one-to-one scheme or a one-to-many scheme. When V2V communication is performed using sidelink communication technology, the UE 235 may refer to a communication node located in the first vehicle 100 of FIG. 1, and the UE 236 may refer to a communication node located in the second vehicle 110 of FIG. 1. When V2I communication is performed using sidelink communication technology, the UE 235 may refer to a communication node located in the first vehicle 100 of FIG. 1, and the UE 236 may refer to a communication node located in the infrastructure 120 of FIG. 1. When V2P communication is performed using sidelink communication technology, the UE 235 may refer to a communication node located in the first vehicle 100 of FIG. 1, and the UE 236 may refer to a communication node carried by the person 130.

The scenarios to which the sidelink communications are applied may be classified as shown below in Table 1 according to the positions of the UEs (e.g. the UEs 235 and 236) participating in the sidelink communications. For example, the scenario for the sidelink communications between the UEs 235 and 236 shown in FIG. 2 may be a sidelink communication scenario C.

[Table 1]

| Sidelink CommunicationScenario | Position of UE 235 | Position of UE 236 |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g. the UEs 235 and 236) performing sidelink communications may be configured as follows.

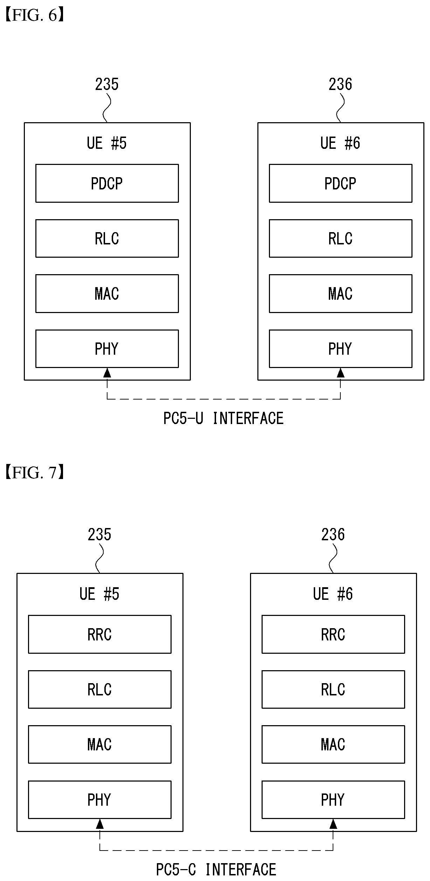

FIG. 6 is a block diagram illustrating a first exemplary embodiment of a user plane protocol stack of a UE performing sidelink communication.

As shown in FIG. 6, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g. PC5-U interface). A layer-2 identifier (ID) (e.g. a source layer-2 ID, a destination layer-2 ID) may be used for the sidelink communications, and the layer 2-ID may be an ID configured for the V2X communications. Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g. the UEs 235 and 236) performing sidelink communications may be configured as follows.

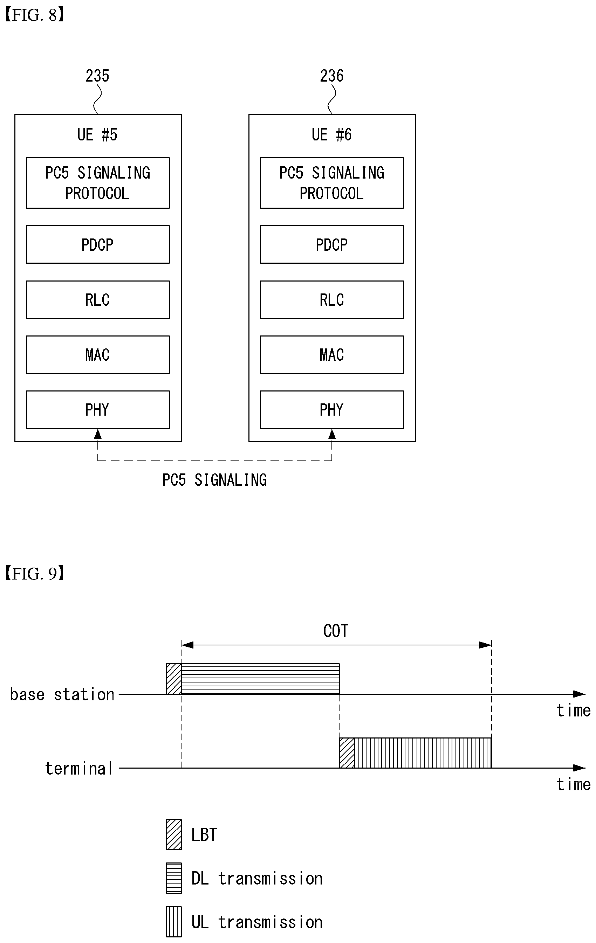

FIG. 7 is a block diagram illustrating a first exemplary embodiment of a control plane protocol stack of a UE performing sidelink communication, and FIG. 8 is a block diagram illustrating a second exemplary embodiment of a control plane protocol stack of a UE performing sidelink communication.

As shown in FIGS. 7 and 8, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The control plane protocol stack illustrated in FIG. 7 may be a control plane protocol stack for transmission and reception of broadcast information (e.g. Physical Sidelink Broadcast Channel (PSBCH)).

The control plane protocol stack shown in FIG. 7 may include a PHY layer, a MAC layer, an RLC layer, and a radio resource control (RRC) layer. The sidelink communications between the UEs 235 and 236 may be performed using a PC5 interface (e.g. PC5-C interface). The control plane protocol stack shown in FIG. 8 may be a control plane protocol stack for one-to-one sidelink communication. The control plane protocol stack shown in FIG. 8 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g. UE 235 or 236) by higher layer signaling. The PSCCH may be used for transmitting and receiving sidelink control information (SCI) and may also be configured in the UE (e.g. UE 235 or 236) by higher layer signaling.

The PSDCH may be used for a discovery procedure. For example, a discovery signal may be transmitted over the PSDCH. The PSBCH may be used for transmitting and receiving broadcast information (e.g. system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

[Table 2]

| Sidelink TM | Description |
|:---:|:---:|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g. a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g. UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g. UE 235 or 236) within the resource pool configured by the dedicated RRC signaling procedure or the broadcast RRC signaling procedure.

Hereinafter, sidelink communication methods will be described. Even when a method (e.g. transmission or reception of a signal) to be performed at a first communication node among communication nodes is described, a corresponding second communication node may perform a method (e.g. reception or transmission of the signal) corresponding to the method performed at the first communication node. That is, when an operation of a UE #1 (e.g. vehicle #1) is described, a UE #2 (e.g. vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The base station may transmit system information (e.g. SIB12, SIB13, SIB14) and RRC messages including configuration information for sidelink communication (i.e. sidelink configuration information) to UE(s). The UE may receive the system information and RRC messages from the base station, identify the sidelink configuration information included in the system information and RRC messages, and perform sidelink communication based on the sidelink configuration information. The SIB12 may include sidelink communication/discovery configuration information. The SIB13 and SIB14 may include configuration information for V2X sidelink communication.

The sidelink communication may be performed within a SL bandwidth part (BWP). The base station may configure SL BWP(s) to the UE using higher layer signaling. The higher layer signaling may include *SL-BWP-Config* and/or *SL-BWP-ConfigCommon*. *SL-BWP-Config* may be used to configure a SL BWP for UE-specific sidelink communication. *SL-BWP-ConfigCommon* may be used to configure cell-specific configuration information.

Furthermore, the base station may configure resource pool(s) to the UE using higher layer signaling. The higher layer signaling may include *SL-BWP-PoolConfig, SL-BWP-PoolConfigCommon, SL-BWP-DiscPoolConfig,* and/or *SL-BWP-DiscPoolConfigCommon*. *SL-BWP-PoolConfig* may be used to configure a sidelink communication resource pool. *SL-BWP-PoolConfigCommon* may be used to configure a cell-specific sidelink communication resource pool. *SL-BWP-DiscPoolConfig* may be used to configure a resource pool dedicated to UE-specific sidelink discovery. *SL-BWP-DiscPoolConfigCommon* may be used to configure a resource pool dedicated to cell-specific sidelink discovery. The UE may perform sidelink communication within the resource pool configured by the base station.

The sidelink communication may support SL discontinuous reception (DRX) operations. The base station may transmit a higher layer message (e.g. *SL-DRX-Config*) including SL DRX-related parameter(s) to the UE. The UE may perform SL DRX operations based on *SL-DRX-Config* received from the base station. The sidelink communication may support inter-UE coordination operations. The base station may transmit a higher layer message (e.g. *SL-InterUE-CoordinationConfig*) including inter-UE coordination parameter(s) to the UE. The UE may perform inter-UE coordination operations based on *SL-InterUE-CoordinationConfig* received from the base station.

The sidelink communication may be performed based on a single-SCI scheme or a multi-SCI scheme. When the single-SCI scheme is used, data transmission (e.g. sidelink data transmission, sidelink-shared channel (SL-SCH) transmission) may be performed based on one SCI (e.g. 1st-stage SCI). When the multi-SCI scheme is used, data transmission may be performed using two SCIs (e.g. 1st-stage SCI and 2nd-stage SCI). The SCI(s) may be transmitted on a PSCCH and/or a PSSCH. When the single-SCI scheme is used, the SCI (e.g. 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The SCI format 1-A may be used for scheduling a PSSCH and second-stage SCI. The SCI format 1-A may include at least one among priority information, frequency resource assignment information, time resource assignment information, resource reservation period information, demodulation reference signal (DMRS) pattern information, second-stage SCI format information, beta_offset indicator, number of DMRS ports, modulation and coding scheme (MCS) information, additional MCS table indicator, PSFCH overhead indicator, or conflict information receiver flag.

The SCI format 2-A may be used for decoding of a PSSCH. The SCI format 2-A may include at least one among a HARQ processor number, new data indicator (NDI), redundancy version (RV), source ID, destination ID, HARQ feedback enable/disable indicator, cast type indicator, or CSI request.

The SCI format 2-B may be used for decoding of a PSSCH. The SCI format 2-B may include at least one among a HARQ processor number, NDI, RV, source ID, destination ID, HARQ feedback enable/disable indicator, zone ID, or communication range requirement.

The SCI format 2-C may be used for decoding of a PSSCH. In addition, the SCI format 2-C may be used to provide or request inter-UE coordination information. The SCI format 2-C may include at least one among a HARQ processor number, NDI, RV, source ID, destination ID, HARQ feedback enable/disable indicator, CSI request, or providing/requesting indicator.

When a value of the providing/requesting indicator is set to 0, this may indicate that the SCI format 2-C is used to provide inter-UE coordination information. In this case, the SCI format 2-C may include at least one among resource combinations, first resource location, reference slot location, resource set type, or lowest subchannel indexes.

When a value of the providing/requesting indicator is set to 1, this may indicate that the SCI format 2-C is used to request inter-UE coordination information. In this case, the SCI format 2-C may include at least one among a priority, number of subchannels, resource reservation period, resource selection window location, resource set type, or padding bit(s).

Meanwhile, sidelink communication may be performed in a licensed band and/or an unlicensed band. Sidelink communication performed in an unlicensed band may be referred to as sidelink-unlicensed band (SL-U) communication or unlicensed band-sidelink (U-SL) communication. In SL-U communication, a first terminal may communicate with a second terminal according to a mode 1 or mode 2. When the mode 1 is used, the first terminal may communicate with the second terminal based on scheduling by a base station. When the mode 2 is used, the first terminal may communicate with the second terminal without scheduling by a base station. The mode 1 may correspond to the sidelink TM #1 or #3 disclosed in Table 2 above. The mode 2 may correspond to the sidelink TM #2 or #4 disclosed in Table 2 above.

FIG. 9 is a timing diagram illustrating a first exemplary embodiment of a communication method in an unlicensed band.

As shown in FIG. 9, a base station may perform a listen-before-talk (LBT) operation to perform downlink (DL) transmission, and if a result of the LBT operation indicates an idle state (e.g. clean state) of a channel, the base station may perform DL transmission. A terminal may perform an LBT operation to perform uplink (UL) transmission, and if a result of the LBT operation indicates an idle state of a channel, the terminal may perform UL transmission. If the result of the LBT operation indicates a busy state of the channel, the DL transmission and/or UL transmission may not be performed. The DL transmission and/or UL transmission may be performed within a channel occupancy time (COT). The COT may be initiated by the base station or terminal. The LBT operations may be performed based on one of categories disclosed in Table 3 below.

[Table 3]

| | Description |
|---|---|
| Category 1 (Cat 1 LBT) | The transmission operation is performed after a short switching gap of 16 $\mu s$. The CCA operation is not performed. |
| Category 2 (Cat 2 LBT) | The LBT operation is performed within a fixed CCA period (e.g. 25 $\mu s$) without a random backoff operation. |
| Category 3 (Cat 3 LBT) | The LBT operation is performed based on a random backoff operation and a variable CCA period. The size of contention window is fixed. |
| Category 4 (Cat 4 LBT) | The LBT operation is performed based on a random backoff operation and a variable CCA period. The size of contention window is variable. |

The LBT operation may refer to a clear channel assessment (CCA) operation. The CCA operation may be performed during a CCA period. When the CCA operation is performed, the communication node (e.g. base station and/or terminal) may identify a channel state based on an energy detection (ED) scheme. In other words, the communication node may determine whether another signal exists in the channel. If an energy detected during the CCA period is less than a threshold (e.g. ED threshold), the communication node may determine the channel state as the idle state. In other words, the communication node may determine that no other signals exist in the channel. If the channel state is determined as the idle state, the communication node may access the channel within the COT. If the energy detected during the CCA period is equal to or above the threshold, the communication node may determine the channel state as the busy state. In other words, the communication node may determine that another signal exists in the channel. If the channel state is the busy state, the communication node may not access the channel within the COT.

In an unlicensed band, the communication node may perform the LBT operation and transmit data when a result of the LBT operation indicates the idle state of the channel. In this case, the base station may transmit a DL transmission burst within the COT, and the terminal may transmit a UL transmission burst within the COT. The COT may be configured within a maximum COT (MCOT). A slot duration of CCA may be 5 $\mu s$ ~ 9 $\mu s$. The duration of the MCOT may be 8 ms. The base station may initiate and/or configure a COT based on a higher layer parameter *SemiStaticChannelAccessConfig*. *SemiStaticChannelAccessConfig* may include information on a period of the COT. The terminal may identify the COT initiated by the base station based on *SemiStaticChannelAccessConfig*.

The terminal may initiate and/or configure a COT based on a higher layer parameter *SemiStaticChannelAccessConfigUE*. *SemiStaticChannelAccessConfigUE* may include information on a period and an offset of the COT. The base station may identify the COT initiated by the terminal based on *SemiStaticChannelAccessConfigUE*.

The terminal may initiate and/or configure the COT based on *SemiStaticChannelAccessConfigUE* in the unlicensed band. As another method, the base station may signal *SemiStaticChannelAccessConfigSL-U* for a COT of SL-U communication to the terminal. The COT for SL-U communication may be referred to as a sidelink (SL)-COT. *SemiStaticChannelAccessConfigSL-U* may include information on a period and an offset of the SL-COT. The terminal may configure the SL-COT based on *SemiStaticChannelAccessConfig-U.* Other terminals may identify the COT initiated based on *SemiStaticChannelAccessConfigSL-U.*

In an unlicensed band, the terminal may perform an LBT operation before SL communication (e.g. transmission of SL data) in order to perform the SL communication. If the LBT operation succeeds, a COT may be initiated in the unlicensed band, and the SL communication may be performed within the COT. 'The LBT operation succeeds' may mean that a result of the LBT operation indicates an idle state.

In an unlicensed band, a channel access procedure may be classified into a DL channel access procedure and a UL channel access procedure. The DL channel access procedure may be classified into a Type 1 DL channel access procedure and a Type 2 DL channel access procedure. The Type 1 DL channel access procedure may be performed for initiation of a COT. The Type 2 DL channel access procedure may be performed for transmission within a COT (e.g. shared COT). The channel access procedure may refer to an LBT operation. The Type 1 DL channel access procedure may be performed for at least one of physical downlink shared channel (PDSCH) transmission, physical downlink control channel (PDCCH) transmission, or enhanced PDCCH (EPDCCH) transmission initiated by an eNB and/or any transmission initiated by a gNB. The eNB may refer to a base station in a 4G communication system, and the gNB may refer to a base station in a 5G communication system.

The Type 2 DL channel access procedure may be performed for at least one of discovery burst transmission or transmission not including a PDSCH initiated by an eNB and/or discovery burst transmission or discovery transmission multiplexed with non-unicast information initiated by a gNB. The Type 2 DL channel access procedure may be classified into a Type 2A DL channel access procedure, a Type 2B DL channel access procedure, and a Type 2C DL channel access procedure. The lengths of sensing periods (e.g. sensing intervals) in the Type 2A DL channel access procedure, Type 2B DL channel access procedure, and Type 2C DL channel access procedure may be different. The length of the sensing period in the Type 2A DL channel access procedure may be 25 µs. The length of the sensing period in the Type 2B DL channel access procedure may be 16 µs. Sensing operations may not be performed in the Type 2C DL channel access procedure.

The UL channel access procedure may be classified into a Type 1 UL channel access procedure and a Type 2 UL channel access procedure. The Type 1 UL channel access procedure may be performed for initiation of a COT. The Type 2 UL channel access procedure may be performed for transmission within a COT (e.g. shared COT). The Type 1 UL channel access procedure may be performed for at least one of physical uplink shared channel (PUSCH) transmission or sounding reference signal (SRS) transmission scheduled or configured by an eNB, at least one of PUSCH transmission or SRS transmission scheduled or configured by a gNB, PUCCH transmission scheduled or configured by a gNB, and/or transmission related to a random access (RA) procedure.

The Type 2 UL channel access procedure may be classified into a Type 2A UL channel access procedure, a Type 2B UL channel access procedure, and a Type 2C UL channel access procedure. The lengths of sensing periods for the Type 2A UL channel access procedure and Type 2B UL channel access procedure may be different. The length of the sensing period in the Type 2A UL channel access procedure may be 25 µs. The length of the sensing period in the Type 2B UL channel access procedure may be 16 µs. Sensing operations may not be performed in the Type 2C UL channel access procedure.

The Type 1 DL channel access procedure, Type 2 DL channel access procedure, Type 1 UL channel access procedure, and/or Type 2 UL channel access procedure may be used for SL-U communication. In this case, in description on the Type 1 DL channel access procedure, Type 2 DL channel access procedure, Type 1 UL channel access procedure, and/or Type 2 UL channel access procedure, a downlink channel and/or uplink channel may be interpreted as a sidelink channel. The LBT operation may be interpreted as the Type 1 DL channel access procedure, Type 2 DL channel access procedure, new Type DL channel access procedure, Type 1 UL channel access procedure, Type 2 UL channel access procedure, and/or new Type UL channel access procedure.

In SL-U communication, a communication node (e.g. base station, terminal) may perform an LBT operation before transmission. An automatic gain control (AGC) operation may be required for transmission and reception of SL data. The first symbol of a slot N may be used for the AGC operation. Therefore, the LBT operation may be performed before the start of the AGC operation in SL-U communication. The symbol used for the AGC operation may be referred to as an AGC symbol. The communication node may perform transmission (e.g. data transmission) after performing the LBT operation and AGC operation.

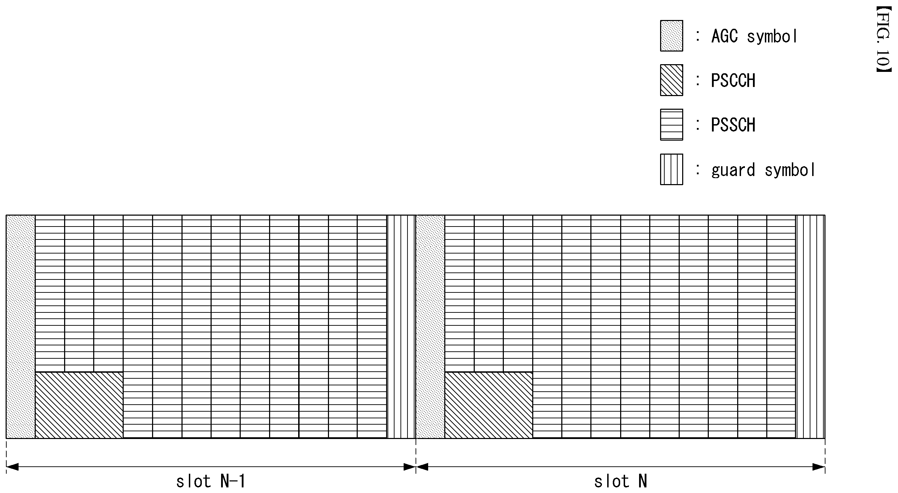

FIG. 10 is a conceptual diagram illustrating a first exemplary embodiment of data transmission in unlicensed band sidelink communication.

As shown in FIG. 10, one slot (e.g. SL slot) may include 14 symbols. An automatic gain control (AGC) symbol may be mapped to the first symbol (e.g. symbol #0) within one slot, and a guard symbol may be mapped to the last symbol (e.g.

symbol #13) within one slot. Further, a PSCCH may be mapped to three symbols (e.g. symbols #1 to #3) within one slot, and a PSSCH may be mapped to twelve symbols within one slot. The PSSCH may be scheduled by first stage SCI and/or second stage SCI. Here, it may be assumed for convenience of description that one slot includes one AGC symbol, three PSCCH symbols, twelve PSSCH symbols, and one guard symbol, but the present disclosure is not limited thereto.

In SL-U communication, as in NR-U, an LBT operation may be performed for a certain time period before data transmission to allow the data transmission in an unlicensed band. In FIG. 10, the LBT operation may be performed at an AGC symbol in a slot N-1. When the LBT operation fails at the AGC symbol in the slot N-1, a PSCCH and/or PSSCH may not be transmitted in the slot N-1. Further, even when an LBT operation succeeds at a specific symbol after the AGC symbol in the slot N-1, PSCCH and/or PSSCH transmission may be possible from the next slot N. Therefore, when the LBT operation fails in SL-U communication, a transmission delay on a slot basis may occur for data transmission. Here, the data transmission may refer to transmission of a PSSCH, and a PSCCH may include control information (e.g. first stage SCI) associated with the PSSCH.

Next, a method for preventing a slot-level delay of data transmission in SL-U communication will be described.

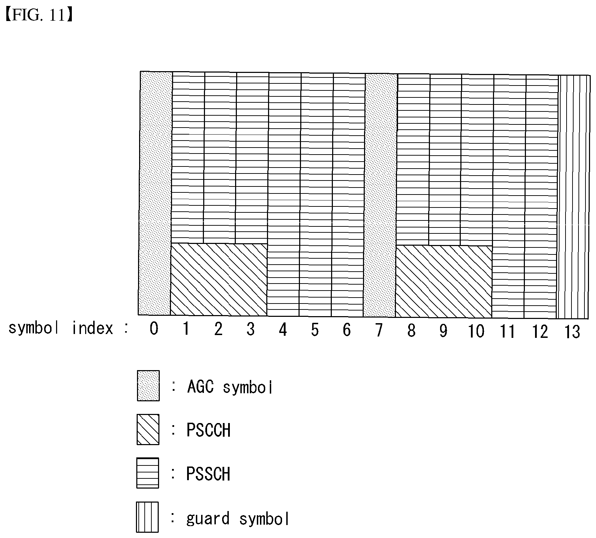

FIG. 11 is a conceptual diagram illustrating a second exemplary embodiment of data transmission in unlicensed band sidelink communication.

As shown in FIG. 11, one slot (e.g. SL slot) may include 14 symbols, and two start symbols for PSSCH transmission candidates may be configured. The first start symbol may be mapped to a first AGC symbol (e.g. symbol #0), and may be a time at which a first LBT operation for PSSCH transmission in the first PSSCH transmission candidate within one slot is performed. The first PSSCH transmission candidate may be mapped to six symbols (e.g. symbols #1 to #6) within one slot. A first PSCCH may be a PSCCH associated with the first PSSCH transmission candidate and may be mapped to three symbols (e.g. symbols #1 to #3) within one slot. The second start symbol may be mapped to a second AGC symbol (e.g. symbol #7), and may be a time at which a second LBT operation for PSSCH transmission in a second PSSCH transmission candidate within one slot may be performed. The second PSSCH transmission candidate may be mapped to six symbols (e.g. symbols #8 to #12) within one slot. A second PSCCH may be a PSCCH associated with the second PSSCH transmission candidate and may be mapped to three symbols (e.g. symbols #8 to #10) within one slot. The first and second PSSCH transmission candidates may be scheduled by first stage SCI and/or second stage SCI. Further, one slot may include two guard symbols. The first guard symbol may be mapped to the symbol #6 and may be a guard symbol associated with the first PSSCH transmission candidate. The second guard symbol may be mapped to the symbol #13 and may be a guard symbol associated with the second PSSCH transmission candidate. Here, it may be assumed for convenience of description that one slot is configured to include two start symbols and two PSSCH transmission candidates. Further, each of the two start symbols may be mapped to a predefined symbol within one slot, and each of the two PSSCH transmission candidates may be mapped to a plurality of predefined symbols within one slot. It may be assumed that each of the two PSSCH transmission candidates is associated with one PSCCH, and each PSCCH is mapped to a plurality of predefined symbols within one slot. However, the present disclosure is not limited thereto.

As described above, one slot may include one or two start symbols. Transmission time(s) of the PSSCH transmission candidate(s) may vary depending on the start symbol(s). When two start symbols are configured to be included within one slot, a method for determining a transport block size (TBS) may be required so that the same TBS is determined for each PSSCH transmission candidate. Each of the two start symbols may correspond to a PSSCH transmission candidate capable of PSSCH transmission. The PSSCH transmission may be expressed as data transmission.

When the TBS is determined based on the earliest start symbol (hereinafter referred to as 'first start symbol'), data transmission may not be performed in the first PSSCH transmission candidate (hereinafter referred to as 'first PSSCH transmission candidate'). Data transmission may be performed in the second PSSCH transmission candidate (hereinafter referred to as 'second PSSCH transmission candidate'), and an effective code rate of the PSSCH transmission may be too high. In such a case, due to the high code rate, decoding of data transmitted in the second PSSCH transmission candidate may fail at a receiving side (e.g. receiving terminal). Accordingly, the transmitting terminal may need to perform a retransmission of a transport block (TB), which was intended to be transmitted at the first start symbol, at the first start symbol of the next slot. On the other hand, when the TBS is determined based on the later start symbol, a peak data rate may be limited. Here, the data may refer to the TB, and the data transmission may be expressed as PSSCH transmission as described above.

In the present disclosure, a method for determining a TBS when two start symbols exist in SL-U is proposed. In a TBS determination method in SL-U, a UE may first need to determine the number of resource elements (REs) within a slot. Then, the UE may need to perform steps of determining a TBS based on the number of REs within a slot. Here, since the steps for determining a TBS based on the number of REs in the slot are identical to those in the existing technical specifications, detailed descriptions thereon will be omitted.

A first exemplary embodiment of the TBS determination method and transmission procedure in SL-U (hereinafter referred to as 'first exemplary embodiment of the TBS transmission method') will be described.

The first exemplary embodiment of the TBS transmission method will be described based on a first UE and a second UE, and the first UE may perform the following steps. Here, the first UE may refer to a transmitting terminal, and the second UE may refer to a receiving terminal.

In step S1210, the first UE may identify a first start symbol and a second start symbol corresponding to a first transmission candidate and a second transmission candidate within a first slot based on start symbol configuration information. Here, the first transmission candidate may include first control information and/or a first data transmission candidate, and the first control information may be control information associated with the first data transmission candidate. Further, the second transmission candidate may include second control information and/or a second data transmission candidate, and the second control information may be control information associated with the second data transmission candidate. Meanwhile, the transmission candidate may be referred to as a transmission occasion or a transmission instance.

In an exemplary embodiment, it may be assumed that the first slot includes 14 symbols and includes two AGC symbols (a first AGC symbol and a second AGC symbol) and one guard symbol. It may be assumed that two transmission candidates (the first transmission candidate and the second transmission candidate) exist in the first slot. Further, it may be assumed that each of the two transmission candidates includes a PSSCH transmission candidate and/or a PSCCH associated with a corresponding PSSCH.

In an exemplary embodiment, as shown in FIG. 11, the first AGC symbol may be mapped to the symbol #0 (symbol index 0), the second AGC symbol may be mapped to the symbol #7 (symbol index 7), and the guard symbol may be mapped to the symbol #13 (symbol index 13). Further, the first PSSCH transmission candidate may be mapped to the symbols #1 to #6, and the second PSSCH transmission candidate may be mapped to the symbols #8 to #12. The first PSCCH may be a PSCCH associated with the first PSSCH transmission candidate and may be mapped to the symbols #1 to #3. The second PSCCH may be a PSCCH associated with the second PSSCH transmission candidate and may be mapped to the symbols #8 to #10.

Meanwhile, the start symbol configuration information may be received from a base station. The first UE may further perform a step of receiving the start symbol configuration information from the base station before performing step S1210.

In step S1220, the first UE may determine a TBS based on at least one of the first start symbol or the second start symbol.

To determine the TBS, the first UE may first determine the number $N_{RE}$ of REs within the slot. The number $N_{RE}$ of REs within the slot may be expressed as in Equation 1.

[Equation 1]

$$N_{RE} = N_{RE}' \cdot n_{PRB} - N_{RE}^{SCI,1} - N_{RE}^{SCI,2}$$

$$N_{RE}' = N_{sc}^{RB}\left(N_{symb}^{sh} - N_{symb}^{PSFCH} - N_{symb}^{SL-PRS}\right) - N_{oh}^{PRB} - N_{RE}^{DMRS}$$

In Equation 1, $N_{RE}'$ may indicate the number of REs allocated to a PSSCH within a physical resource block (PRB). Here, $N_{sc}^{RB} = 12$ may indicate the number of subcarriers in a PRB, and $N_{symb}^{sh}$ may indicate the number of sidelink symbols within a slot. When a 'PSFCH overhead indication field' of SCI format 1-A indicates 1, $N_{symb}^{PSFCH} = 3$ may be used, and otherwise, $N_{symb}^{PSFCH} = 0$ may be used. $N_{symb}^{SL-PRS}$ may indicate the number of OFDM symbols used for sidelink positioning reference signals (SL PRS) with a slot. $N_{oh}^{PRB}$ may indicate overhead provided through a higher layer parameter *sl-X-Overhead*. $N_{RE}^{DMRS}$ may be indicated as shown in Table 4 according to a higher layer parameter *sl-PSSCH-DMRS-TimePatternList*.

In Equation 1, $N_{RE}'$ may indicate the number of REs allocated to a PSSCH within a physical resource block (PRB). Here, $N_{sc}^{RB} = 12$ may indicate the number of subcarriers in a PRB, and $N_{symb}^{sh}$ may indicate the number of sidelink symbols within a slot. When a 'PSFCH overhead indication field' of SCI format 1-A indicates *1*, $N_{symb}^{PSFCH} = 3$ may be used, and otherwise, $N_{symb}^{PSFCH} = 0$ may be used. $N_{symb}^{SL-PRS}$ may indicate the number of OFDM symbols used for sidelink positioning reference signals (SL PRS) with a slot. $N_{oh}^{PRB}$ may indicate overhead provided through a higher layer parameter *sl-X-Overhead*. $N_{RE}^{DMRS}$ may be indicated as shown in Table 4 according to a higher layer parameter *sl-PSSCH-DMRS-TimePatternList*.

[Table 4]

| sl-PSSCH-DMRS-TimePatternList | $N_{RE}^{DMRS}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

In Equation 1, $N_{symb}^{sh}$ may be expressed as in Equation 2.

$$[Equation\ 2]$$

$$N_{symb}^{sh} = sl - LengthSymbols - 2$$

Here, *sl-LengthSymbols* may indicate the number of sidelink symbols within a slot, which is provided through a higher layer.

Further, in Equation 1, $n_{PRB}$ may indicate the total number of PRBs allocated to the PSSCH, $N_{RE}^{SCI,1}$ may indicate the total number of REs occupied by the PSCCH and PSCCH demodulation reference signals (DMRS), and $N_{RE}^{SCI,2}$ may indicate the number of coded modulation symbols generated for second stage SCI transmission.

In an exemplary embodiment, the TBS may be determined considering the number of symbols included in a slot. The first start symbol among the first start symbol and the second start symbol may serve as a basis for TBS determination. As illustrated in FIG. 11, the first start symbol may be assumed to be the first AGC symbol mapped to the symbol #0 (symbol index 0), and the second start symbol may be assumed to be the second AGC symbol mapped to the symbol #7 (symbol index 7).

In an exemplary embodiment, when the first start symbol serves as a basis for TBS determination, the first start symbol and the guard symbol may be excluded from the number $N_{symb}^{sh}$ of sidelink symbols within the slot in Equation 1. The number $N_{symb}^{sh}$ of sidelink symbols within the slot may be expressed as in Equation 2.

In another exemplary embodiment, the TBS may be determined considering the number of symbols included in one slot. The second start symbol among the first start symbol and the second start symbol may serve as a basis for TBS determination. As described above, the first start symbol may be assumed to be the first AGC symbol mapped to the symbol #0 (symbol index 0), and the second start symbol may be assumed to be the second AGC symbol mapped to the symbol #7 (symbol index 7).

In another exemplary embodiment, when the second start symbol serves as a basis for TBS determination, the first start symbol, the second start symbol, and the guard symbol may be excluded from the number $N_{symb}^{sh}$ of sidelink symbols within the slot in Equation 1. The number $N_{symb}^{sh}$ of sidelink symbols may be expressed as in Equation 3. The number of sidelink symbols may simply be expressed as the number of symbols.

[Equation 3]

$$N_{symb}^{sh} = sl - LengthSymbols - 3$$

In yet another exemplary embodiment, the TBS may be determined considering the number of symbols included in one slot. The second start symbol among the first start symbol and the second start symbol may serve as a basis for TBS determination. As described above, the first start symbol may be assumed to be the first AGC symbol mapped to the symbol #0 (symbol index 0), and the second start symbol may be assumed to be the second AGC symbol mapped to the symbol #7 (symbol index 7).

In yet another exemplary embodiment, when the second start symbol serves as a basis for TBS determination, the second start symbol and the guard symbol may be excluded from the number $N_{symb}^{sh}$ of sidelink symbols within the slot in Equation 1.

According to the above-described another exemplary embodiment and yet another exemplary embodiment, when the second start symbol serves as the basis for TBS determination, at least two or more symbols among the first start symbol, the second start symbol, and the guard symbol may be excluded from the number of sidelink symbols.

As described above, in an exemplary embodiment, the first start symbol may serve as a basis for TBS determination. In another exemplary embodiment, the second start symbol may serve as a basis for TBS determination. When the first start symbol serves as the basis for TBS determination, a determined TBS may be more suitable for data transmission having a higher data rate. In contrast, when the second start symbol serves as the basis for TBS determination, a determined TBS may be more suitable for data transmission having lower latency and higher reliability. Depending on a specific condition, at least one of the first start symbol or the second start symbol may be considered as the basis for TBS determination. Further, an indicator for configuring the basis for TBS determination may be used, and the indicator may be expressed as one bit or two or more bits. The indicator may be transmitted through at least one of first stage SCI, second stage SCI, a MAC CE signaling message, or an RRC signaling message. Here, the specific condition may include at least one of a priority, latency, channel busy ratio (CBR), or channel occupancy ratio (CR).

In an exemplary embodiment or another exemplary embodiment, whether to determine a TBS based on the first start symbol or the second start symbol may be dynamically indicated. Alternatively, a TBS may be determined based on the first start symbol or the second start symbol for each specific period.

Meanwhile, in SL-U communication, a terminal (e.g. the first UE or the second UE) may be configured with start symbol configuration information, and the start symbol configuration information may include information on a slot length in symbols, which is used for configuring two start symbols (e.g. the first start symbol, the second start symbol).

For example, the start symbol configuration information may include information for setting the slot length in symbols to a specific value or higher. The information on the slot length in symbols may be expressed by a parameter *sl-LengthSymbols.* The parameter *sl-LengthSymbols* may be set to one of *sym11, sym12,* or *sym14.* In another example, the start symbol configuration information may be configured such that all symbols within a slot are used for SL-U communication. The parameter *sl-LengthSymbols* may be set to *sym14.* In this case, when the TBS is determined based on the second start symbol (e.g. the second start symbol), the number $N_{symb}^{sh}$ of sidelink symbols within a slot may always be 11 as shown in Equation 3.

In yet another exemplary embodiment, a TBS may be determined considering the number of REs included in a slot. The UE may calculate the number of REs to determine a TBS. The UE may calculate the number of REs for TBS determination by subtracting a specific number of REs from the total number of REs within the slot.

In yet another exemplary embodiment, when the first start symbol serves as a basis for TBS determination, a specific number of REs (hereinafter referred to as a first specific number of REs) subtracted when calculating the number of REs may be 0. On the other hand, when the second start symbol serves as a basis for TBS determination, a specific number of REs (hereinafter referred to as a second specific number of REs) subtracted when calculating the number of REs may be 12. When a TBS is determined based on the first start symbol or the second start symbol, advantages and disadvantages may exist as described above.

In yet another exemplary embodiment, the UE may calculate the number of REs for TBS determination by subtracting an average value of the first specific number and the second specific number from the total number of REs within the slot, and $N_{RE}'$ may be expressed as in Equation 4.

[Equation 4]

$$N'_{RE} = N_{sc}^{RB}\left(N_{symb}^{sh} - N_{symb}^{PSFCH}\right) - N_{oh}^{PRB} - N_{RE}^{DMRS} - N_{RE}^{starting}$$

$$N_{RE}^{starting}$$

$$= \begin{cases} 6 \ (when \ a \ 'two \ start \ symbol \ indication' of \ SCI \ format \ 1-A \ indicates \ "1" \\ 0 \ (otherwise) \end{cases}$$

In Equation 4, $N_{RE}^{starting} = 6$ may be used when a 'two start symbol indication' field of SCI format 1-A indicates 1, and otherwise, $N_{RE}^{starting} = 0$ may be used.

In yet another exemplary embodiment, the 'two start symbol indication' field of SCI format 1-A may be information indicating existence of two start symbols. The 'two start symbol indication' field may be delivered through a higher layer signaling (e.g. MAC CE signaling, RRC signaling).

In yet another exemplary embodiment, a TBS may be determined by considering the number of REs included in one slot. One start symbol among the first start symbol or the second start symbol may serve as a basis for TBS determination. The UE may calculate the number of REs to determine a TBS. The UE may calculate the number of REs for TBS determination by subtracting a specific number of REs from the total number of REs within the slot.

In yet another exemplary embodiment, the UE may subtract a specific number of REs (i.e. a first specific number of REs or a second specific number of REs) according to the basis for TBS determination when calculating the number of REs. As described above, the first specific number of REs may indicate a specific number of REs to be subtracted when calculating the number of REs, under the condition that the first start symbol serves as the basis for TBS determination, and the first specific number of REs may be 0. In addition, the second specific number of REs may indicate a specific number of REs to be subtracted when calculating the number of REs, under the condition that the second start symbol serves as the basis for TBS determination, and the second specific number of REs may be 12.

In yet another exemplary embodiment, $N'_{RE}$ may be represented as Equation 5.

[Equation 5]

$$N'_{RE} = N_{sc}^{RB}\left(N_{symb}^{sh} - N_{symb}^{PSFCH}\right) - N_{oh}^{PRB} - N_{RE}^{DMRS} - N_{RE}^{starting}$$

$$N_{RE}^{starting}$$

$$= \begin{cases} 12 \ (when \ a \ 'two \ start \ symbol \ indication' of \ SCI \ format \ 1-A \ indicates \ "1" \\ 0 \ (otherwise) \end{cases}$$

In Equation 5, $N_{RE}^{starting} = 12$ may be used when a 'two start symbol indication' field of SCI format 1-A indicates 1, and otherwise, $N_{RE}^{starting} = 0$ may be used.

In yet another exemplary embodiment, the 'two start symbol indication' field of SCI format 1-A may be information indicating the first start symbol or the second start symbol as a basis for TBS determination. When the 'two start symbol indication' field of SCI format 1-A is set to 0, it may indicate that the first start symbol serves as the basis for TBS determination. When the 'two start symbol indication' field of SCI format 1-A is set to 1, it may indicate that the second start symbol serves as the basis for TBS determination. Furthermore, the 'two start symbol indication' field may be delivered through higher layer signaling (e.g. MAC CE signaling, RRC signaling).

In step S1230, the first UE may perform a first LBT operation at the first start symbol.

In step S1240, the first UE may identify whether the first LBT operation has succeeded or failed.

In step S1250, when the first LBT operation is determined to have failed at the first start symbol, the first UE may perform a second LBT operation at the second start symbol.

In step S1260, the first UE may identify whether the second LBT operation has succeeded or failed.

In step S1270, when the second LBT operation is determined to have succeeded at the second start symbol, the first UE may perform an SL transmission with the TBS determined in step S1220. The first UE may perform the SL transmission using the second transmission candidate.

The first UE may transmit at least one of control information or data to the second UE through a sidelink according to the TBS determined in step S1270.

In the first exemplary embodiment of the TBS determination method, each of the first start symbol and the second start symbol may be an AGC symbol in the first slot. The first UE may perform the SL transmission with the same TBS in the first transmission candidate and the second transmission candidate.

Meanwhile, after performing step S1270, the first UE may receive feedback information on the data transmitted in step S1270 from the second UE. When the second UE succeeds in decoding/receiving the data, the second UE may transmit acknowledgement (ACK) information to the first UE. Alternatively, when the second UE fails in decoding/receiving the data, the second UE may transmit negative-acknowledgement (NACK) information to the first UE. Here, the feedback information may indicate hybrid automatic repeat request (HAQ) feedback information.

In an exemplary embodiment, the feedback information may be transmitted by being included in the first slot. It may be assumed that the first UE is able to perform an LBT operation at one start symbol among the first start symbol or the second start symbol. In addition, the feedback information may be transmitted using a physical sidelink feedback channel (PSFCH).

In an exemplary embodiment, when the first UE has succeeded in the LBT operation at one start symbol among the first start symbol or the second start symbol within the first slot, the first UE may receive the feedback information within the first slot.

The first UE may transmit control information to the second UE using SCI. As described above, the control information may include information indicating that two start symbols (the first start symbol and the second start symbol) exist in the slot. In addition, the control information may indicate which of the two start symbols, the first start symbol or the second start symbol, serves as a basis for TBS determination.

In the first exemplary embodiment of the TBS determination method, the first LBT operation and the second LBT operation may be performed for SL transmission to the second UE. In the time domain, the second start symbol may be located after the first start symbol.

Meanwhile, in the first exemplary embodiment of the TBS determination method, the second UE may perform the following steps. Redundant descriptions may be omitted.

In step S1310, the second UE may identify the first start symbol and the second start symbol corresponding to the first transmission candidate and the second transmission candidate within the first slot based on the start symbol configuration information.

As described above, the first transmission candidate may include first control information and/or a first data transmission candidate, and the first control information may be control information associated with the first data transmission candidate. In addition, the second transmission candidate may include second control information and/or a second data transmission candidate, and the second control information may be control information associated with the second data transmission candidate. Meanwhile, a transmission candidate may be referred to as a transmission occasion or transmission instance.

In an exemplary embodiment, the first slot may include 14 symbols and may be assumed to include two AGC symbols (a first AGC symbol and a second AGC symbol) and one guard symbol. It may be assumed that two PSSCH transmission candidates (the first PSSCH transmission candidate and the second PSSCH transmission candidate) exist. In addition, it may be assumed that each of the two PSSCH transmission candidates is associated with a PSCCH.

In an exemplary embodiment, as illustrated in FIG. 11, the first AGC symbol may be mapped to the symbol #0 (symbol index 0), the second AGC symbol may be mapped to the symbol #7 (symbol index 7), and the guard symbol may be mapped to the symbol #13 (symbol index 13). In addition, the first PSSCH transmission candidate may be mapped to the symbols #1 to #6, and the second PSSCH transmission candidate may be mapped to the symbols #8 to #12. The first PSCCH may be a PSCCH associated with the first PSSCH transmission candidate and may be mapped to the symbols #1 to #3. The second PSCCH may be a PSCCH associated with the second PSSCH transmission candidate and may be mapped to the symbols #8 to #10.

Meanwhile, the start symbol configuration information may be received from a base station. The second UE may further perform a step of receiving the start symbol configuration information from the base station before performing step S1310.

In step S1320, the second UE may perform monitoring for an SL transmission of the first UE at one start symbol among the first start symbol or the second start symbol, and may receive control information from the first UE.

In step S1330, the second UE may determine a TBS based on the control information received in step S1320 and may receive data with the TBS from the first UE.

In an exemplary embodiment, as described above, the TBS may be determined by considering the number of symbols included in a slot (e.g. the first slot). The first start symbol among the first start symbol and the second start symbol may serve as a basis for TBS determination. As illustrated in FIG. 11, the first start symbol may be assumed to be the first AGC symbol mapped to the symbol #0 (symbol index 0), and the second start symbol may be assumed to be the second AGC symbol mapped to the symbol #7 (symbol index 7).

In an exemplary embodiment, as described above, when the first start symbol serves as the basis for TBS determination, the first start symbol and the guard symbol may be excluded from the number $N_{symb}^{sh}$ of sidelink symbols within the slot in Equation 1. The number $N_{symb}^{sh}$ of sidelink symbols within the slot may be expressed as Equation 2.

In another exemplary embodiment, as described above, the TBS may be determined by considering the number of symbols included in one slot. The second start symbol among the first start symbol and the second start symbol may serve as a basis for TBS determination. As described above, the first start symbol may be assumed to be the first AGC symbol mapped to the symbol #0 (symbol index 0), and the second start symbol may be assumed to be the second AGC symbol mapped to the symbol #7 (symbol index 7).

In another exemplary embodiment, as described above, when the second start symbol serves as a basis for TBS determination, the first start symbol, the second start symbol, and the guard symbol may be excluded from the number $N_{symb}^{sh}$ of sidelink symbols within the slot in Equation 1. The number $N_{symb}^{sh}$ of sidelink symbols may simply be expressed as the number of symbols.

In another exemplary embodiment, as described above, the TBS may be determined by considering the number of symbols included in one slot. The second start symbol among the first start symbol and the second start symbol may serve as a basis for TBS determination. As described above, the first start symbol may be assumed to be the first AGC symbol mapped to the symbol #0 (symbol index 0), and the second start symbol may be assumed to be the second AGC symbol mapped to the symbol #7 (symbol index 7).

In yet another exemplary embodiment, when the second start symbol serves as a basis for TBS determination, the second start symbol and the guard symbol may be excluded from the number $N_{symb}^{sh}$ of sidelink symbols within the slot in Equation 1.

According to the above-described another exemplary embodiment and yet another exemplary embodiment, when the second start symbol serves as the basis for TBS determination, at least two or more symbols among the first start symbol, the second start symbol, or the guard symbol may be excluded from the number of symbols.

In an exemplary embodiment or another exemplary embodiment, whether a TBS is determined based on the first start symbol or the second start symbol may be dynamically indicated, as described above. Alternatively, the TBS may be determined based on the first start symbol or the second start symbol according to a certain period.

Meanwhile, in SL-U communication, a terminal (e.g. the first UE or the second UE) may be configured with start symbol configuration information, and the start symbol configuration information may include information on a slot length in symbols, which is used to configure two start symbols (e.g. the first start symbol and the second start symbol).

In yet another exemplary embodiment, as described above, the TBS may be determined by considering the number of REs included in the slot. The UE may calculate the number of REs to determine the TBS. The UE may calculate the number of REs for TBS determination by subtracting a specific number of REs from the total number of REs within the slot.

In yet another exemplary embodiment, as described above, when the first start symbol serves as the basis for TBS determination, a specific number of REs (hereinafter, first specific number of REs) to be subtracted when calculating the number of REs may be 0. On the other hand, when the second start symbol serves as the basis for TBS determination, a specific number of REs (hereinafter, second specific number of REs) to be subtracted when calculating the number of REs may be 12. When the TBS is determined based on the first start symbol or the second start symbol, advantages and disadvantages may exist as described above.

In yet another exemplary embodiment, as described above, the UE may calculate the number of REs for TBS determination by subtracting an average value of the first specific number and the second specific number, and $N'_{RE}$ may be expressed as Equation 4.

In yet another exemplary embodiment, a 'two start symbol indication' field of SCI format 1-A may be information indicating presence of two start symbols, as described above. The 'two start symbol indication' field may be delivered through higher layer signaling (e.g. MAC CE signaling or RRC signaling).

In yet another exemplary embodiment, as described above, the TBS may be determined by considering the number of REs included in one slot. One start symbol among the first start symbol or the second start symbol may serve as a basis for TBS determination. The UE may calculate the number of REs to determine a TBS. The UE may calculate the number of REs for TBS determination by subtracting a specific number of REs from the total number of REs within the slot.

In yet another exemplary embodiment, as described above, the UE may subtract a specific number of REs (the first specific number of REs or the second specific number of REs) according to the basis for TBS determination when calculating the number of REs. As described above, the first specific number of REs may indicate a specific number of REs to be subtracted when calculating the number of REs, under the condition that the first start symbol serves as the basis for TBS determination, and the first specific number of REs may be 0. In addition, the second specific number of REs may indicate a specific number of REs to be subtracted when calculating the number of REs, under the condition that the second start symbol serves as the basis for TBS determination, and the second specific number of REs may be 12.

In yet another exemplary embodiment, $N'_{RE}$ may be represented as Equation 5, as described above.

In yet another exemplary embodiment, a 'two start symbol indication' field of SCI format 1-A may be information indicating the first start symbol or the second start symbol as the basis for TBS determination, as described above. When the 'two start symbol indication' field of SCI format 1-A is set to 0, it may indicate that the first start symbol serves as the basis for TBS determination. When the 'two start symbol indication' field of SCI format 1-A is set to 1, it may indicate that the second start symbol serves as the basis for TBS determination. In addition, the 'two start symbol indication' field may be delivered through higher layer signaling (e.g. MAC CE signaling or RRC signaling).

Meanwhile, after performing step S 1330, the second UE may further perform a step of transmitting feedback information on the data received in step S1330 to the first UE. As described above, when the second UE succeeds in decoding/receiving the data, the second UE may transmit ACK information to the first UE. Alternatively, when the second UE fails in decoding/receiving the data, the second UE may transmit NACK information to the first UE. Here, the feedback information may mean HARQ feedback information.

In an exemplary embodiment, the feedback information may be transmitted by being included in a second slot. It may be assumed that the second UE may perform an LBT operation at one start symbol among the first start symbol or the second start symbol within the second slot. As described above, the first start symbol may be mapped to the first AGC symbol, and the second start symbol may be mapped to the second AGC symbol. Here, the second slot may be a slot after the first slot, and may be a slot after a slot in which the data transmitted in step S1330 is received.

In an exemplary embodiment, the second UE may perform an LBT operation at one start symbol among the first start symbol or the second start symbol. When the LBT operation is performed, the second UE may transmit feedback information to the first UE.

The first UE may transmit control information to the second UE using SCI. As described above, the control information may include information indicating that two start symbols (the first start symbol and the second start symbol) exist in the slot. In addition, the control information may indicate which of the two start symbols, the first start symbol or the second start symbol, serves as the basis for TBS determination.

In the first exemplary embodiment of the TBS determination method, the control information may be transmitted through at least one of an RRC signaling message, a MAC CE signaling message, or SCI.

The first exemplary embodiment of the TBS determination method described above may assume that two start symbols exist in SL-U communication. When two or more start symbols exist, the first exemplary embodiment of the TBS determination method described above may be similarly applied.

In the first exemplary embodiment of the TBS determination method described above, steps S1310 to S1230 have been individually described, but this is not intended to limit the order in which the steps are performed, and when necessary, the respective steps may be performed simultaneously, in a different order, or combined.

In the first exemplary embodiment of the TBS determination method described above, when a CCA slot duration is considered, a period for the LBT operation may be configured within one symbol (71.4 µs) based on the SCS of 15 kHz. Also, a period for the LBT operation may be similarly applied for other SCSs. For example, when the SCS is large, in order to secure a time corresponding to the CCA slot duration, a period for the LBT operation may be configured in two or more symbols.

In SL-U, TBS determination may be differently applied according to each SCS. In other words, one slot duration may be considered. When the SCS is 15 kHz, one slot may include two start symbols. On the other hand, when the SCS is 30 kHz or higher, one slot may include only one start symbol. Therefore, the first exemplary embodiment of the TBS determination method described above may be applied only when the SCS is 15 kHz.

In SL-U, a period for the LBT operation may be configured in units of time rather than in units of symbols. When a period for the LBT operation is configured in a different time unit in SL-U, the first exemplary embodiment of the TBS determination method described above may be similarly applied. Alternatively, operations in the first exemplary embodiment of the TBS determination method described above may be similarly applied.

Information regarding the operation, configuration, and/or application of TBS determination in SL-U described above (hereinafter, SL-U TBS configuration information) may be specifically, independently, or commonly configured based on at least one of a resource pool, a service type, a priority, whether a power saving operation is performed, a QoS parameter (e.g. reliability or delay), a cast type, or a type of terminal (e.g. vehicle (V)-UE or pedestrian (P)-UE). The SL-U TBS configuration information described above may be configured by a network and/or a base station. As another method, the SL-U TBS configuration information described above may be implicitly determined based on preconfigured parameter(s).

In the above-described exemplary embodiments, whether each method (e.g. each rule) is applied may be configured based on at least one of a condition, a combination of conditions, a parameter, or a combination of parameters. Whether each method is applied may be configured by a network and/or a base station. Whether each method is applied may be configured specifically for a resource pool or a service. As another method, whether each method is applied may be configured through PC5-RRC signaling between terminals.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a first user equipment (UE), comprising:

   identifying a first start symbol and a second start symbol respectively corresponding to a first transmission candidate and a second transmission candidate within a first slot based on start symbol configuration information;
   determining a transport block size (TBS) based on the first start symbol or the second start symbol; and
   in response to a listen before talk (LBT) operation performed in one start symbol among the first start symbol or the second start symbol being successful, performing a sidelink (SL) transmission with the TBS.

2. The method according to claim 1, wherein each of the first start symbol and the second start symbol is an auto gain control (AGC) symbol in the first slot, and the SL transmission with an equal TBS is performed in each of the first transmission candidate and the second transmission candidate.

3. The method according to claim 1, wherein the TBS is determined by considering a number of symbols included in the first slot, and one start symbol among the first start symbol or the second start symbol serves as a basis for determining the TBS.

4. The method according to claim 3, wherein when the first start symbol serves as the basis for determining the TBS, the first start symbol and a guard symbol are excluded from the number of symbols, and when the second start symbol serves as the basis for determining the TBS, at least two or more symbols among the first start symbol, the second start symbol, or the guard symbol are excluded from the number of symbols.

5. The method according to claim 1, wherein the TBS is determined by considering a number of resource elements (REs) included in the first slot, the number of REs is calculated by subtracting an average value of a number of REs related to the first start symbol and a number of REs related to the second start symbol from a total number of REs within the first slot, and the SL transmission includes control information indicating that two start symbols exist within the first slot.

6. The method according to claim 1, wherein the TBS is determined by considering a number of REs included in the first slot, one start symbol among the first start symbol or the second start symbol serves as a basis for determining the TBS, and the SL transmission includes control information indicating the first start symbol or the second start symbol as the basis for determining the TBS.

7. The method according to claim 1, wherein the SL transmission includes control information instructing to determine the TBS, and the control information is transmitted through at least one of a medium access control (MAC) control element (CE) message, a radio resource control (RRC) message, or a sidelink control information (SCI).

8. A method of a second user equipment (UE), comprising:

identifying a first start symbol and a second start symbol respectively corresponding to a first transmission candidate and a second transmission candidate within a first slot based on start symbol configuration information;
monitoring a sidelink (SL) transmission of a first UE in one start symbol among the first start symbol or the second start symbol to receive control information from the first UE; and
determining a transport block size (TBS) based on the control information and receiving data with the TBS from the first UE.

9. The method according to claim 8, wherein each of the first start symbol and the second start symbol is an auto gain control (AGC) symbol in the first slot, and the data is equally receivable with the TBS from each of the first transmission candidate and the second transmission candidate.

10. The method according to claim 8, wherein the TBS is determined by considering a number of symbols included in the first slot, and one start symbol among the first start symbol or the second start symbol serves as a basis for determining the TBS.

11. The method according to claim 10, wherein when the first start symbol serves as the basis for determining the TBS, the first start symbol and a guard symbol are excluded from the number of symbols, and when the second start symbol serves as the basis for determining the TBS, at least two or more symbols among the first start symbol, the second start symbol, or the guard symbol are excluded from the number of symbols.

12. The method according to claim 8, wherein the TBS is determined by considering a number of resource elements (REs) included in the first slot, the number of REs is calculated by subtracting an average value of a number of REs related to the first start symbol and a number of REs related to the second start symbol from a total number of REs within the first slot, and the SL transmission includes control information indicating that two start symbols exist within the first slot.

13. The method according to claim 8, wherein the TBS is determined by considering a number of REs included in the first slot, one start symbol among the first start symbol or the second start symbol serves as a basis for determining the TBS, and the SL transmission includes control information indicating the first start symbol or the second start symbol as the basis for determining the TBS.

14. The method according to claim 8, wherein the control information is received through at least one of a medium access control (MAC) control element (CE) message, a radio resource control (RRC) message, or a sidelink control information (SCI).

15. A first user equipment (UE), comprising: at least one processor, wherein the at least one processor causes the first UE to perform:

identifying a first start symbol and a second start symbol respectively corresponding to a first transmission candidate and a second transmission candidate within a first slot based on start symbol configuration information;
determining a transport block size (TBS) based on the first start symbol or the second start symbol; and
in response to a listen before talk (LBT) operation performed in one start symbol among the first start symbol or the second start symbol being successful, performing a sidelink (SL) transmission with the TBS.

16. The first UE according to claim 15, wherein each of the first start symbol and the second start symbol is an auto gain control (AGC) symbol in the first slot, and the SL transmission with an equal TBS is performed in each of the first transmission candidate and the second transmission candidate.

17. The first UE according to claim 15, wherein the TBS is determined by considering a number of symbols included in the first slot, and one start symbol among the first start symbol or the second start symbol serves as a basis for determining the TBS.

18. The first UE according to claim 17, wherein when the first start symbol serves as the basis for determining the TBS, the first start symbol and a guard symbol are excluded from the number of symbols, and when the second start symbol serves as the basis for determining the TBS, at least two or more symbols among the first start symbol, the second start symbol, or the guard symbol are excluded from the number of symbols.

19. The first UE according to claim 15, wherein the TBS is determined by considering a number of resource elements (REs) included in the first slot, the number of REs is calculated by subtracting an average value of a number of REs related to the first start symbol and a number of REs related to the second start symbol from a total number of REs within the first slot, and the SL transmission includes control information indicating that two start symbols exist within the first slot.

20. The first UE according to claim 15, wherein the TBS is determined by considering a number of REs included in the first slot, one start symbol among the first start symbol or the second start symbol serves as a basis for determining the TBS, and the SL transmission includes control information indicating the first start symbol or the second start symbol as the basis for determining the TBS.

【FIG. 1】

【FIG. 2】

【FIG. 3】

【FIG. 4】

【FIG. 5A】

【FIG. 5B】

【FIG. 6】

235

236

UE #5

PDCP

RLC

MAC

PHY

UE #6

PDCP

RLC

MAC

PHY

PC5-U INTERFACE

【FIG. 7】

235

236

UE #5

RRC

RLC

MAC

PHY

UE #6

RRC

RLC

MAC

PHY

PC5-C INTERFACE

【FIG. 8】

235 236

| UE #5 | UE #6 |
|---|---|
| PC5 SIGNALING PROTOCOL | PC5 SIGNALING PROTOCOL |
| PDCP | PDCP |
| RLC | RLC |
| MAC | MAC |
| PHY | PHY |

PC5 SIGNALING

【FIG. 9】

COT

base station — LBT / DL transmission

terminal — LBT / UL transmission

time

time

LBT

DL transmission

UL transmission

【FIG. 10】

【FIG. 11】

symbol index :  0  1  2  3  4  5  6  7  8  9  10  11  12  13

▨ : AGC symbol

◩ : PSCCH

▤ : PSSCH

▥ : guard symbol

## INTERNATIONAL SEARCH REPORT

| International application No. |
| --- |
| **PCT/KR2024/001887** |

**A. CLASSIFICATION OF SUBJECT MATTER**

**H04L 1/00**(2006.01)i

According to International Patent Classification (IPC) or to both national classification and IPC

**B. FIELDS SEARCHED**

Minimum documentation searched (classification system followed by classification symbols)

H04L 1/00(2006.01); H04W 74/08(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비면허 대역(unlicensed band), 사이드링크(sidelink), 전송 블록 크기(transport block size, TBS), 시작 심볼(starting symbol), 전송 후보(transmission candidate), LBT(listen before talk), AGC(auto gain control), RE(resource element)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | NEC. Discussion on physical channel design framework. R1-2212356, 3GPP TSG RAN WG1 #111. Toulouse, France. 07 November 2022.<br>See pages 4, 6 and 11. | 1-3,7-10,14-17<br>6,13,20<br>4-5,11-12,18-19 |
| Y | LG ELECTRONICS. Discussion on physical layer structure for NR sidelink. R1-2001884, 3GPP TSG RAN WG1 Meeting #100bis, e-Meeting. 11 April 2020.<br>See section 2.1.1. | 6,13,20 |
| A | CMCC. Discussion on physical channel design framework for sidelink on unlicensed spectrum. R1-2204307, 3GPP TSG RAN WG1 #109-e, e-Meeting. 29 April 2022.<br>See section 2.3; and figure 6. | 1-20 |
| A | KR 10-2022-0161336 A (LENOVO(BEIJING)LIMITED) 06 December 2022 (2022-12-06)<br>See paragraphs [0022]-[0050]; and figures 2a-2d and 4a-4f. | 1-20 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 May 2024** | **31 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/001887**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0113168 A (ASUSTEK COMPUTER INCORPORATION) 06 October 2020 (2020-10-06)<br>See paragraph [0005]; and claims 1-14. | 1-20 |

Form PCT/ISA/210 (second sheet) (July 2022)

**INTERNATIONAL SEARCH REPORT**
Information on patent family members

International application No.

**PCT/KR2024/001887**

| Patent document cited in search report | | | Publication date (day/month/year) | Patent family member(s) | | | Publication date (day/month/year) |
|---|---|---|---|---|---|---|---|
| KR | 10-2022-0161336 | A | 06 December 2022 | CN | 115362727 | A | 18 November 2022 |
| | | | | EP | 4128920 | A1 | 08 February 2023 |
| | | | | EP | 4128920 | A4 | 22 November 2023 |
| | | | | US | 2023-0146718 | A1 | 11 May 2023 |
| | | | | WO | 2021-195960 | A1 | 07 October 2021 |
| KR | 10-2020-0113168 | A | 06 October 2020 | CN | 111726871 | A | 29 September 2020 |
| | | | | EP | 3713354 | A1 | 23 September 2020 |
| | | | | EP | 3713354 | B1 | 11 May 2022 |
| | | | | ES | 2925067 | T3 | 13 October 2022 |
| | | | | US | 10834704 | B2 | 10 November 2020 |
| | | | | US | 2020-0305127 | A1 | 24 September 2020 |

Form PCT/ISA/210 (patent family annex) (July 2022)